# EUROPÄISCHE PATENTSCHRIFT

(11) **EP 1 258 378 B1**
(45) Veröffentlichungstag und Bekanntmachung des Hinweises auf die Patenterteilung: **26.07.2006**
(21) Anmeldenummer: 02010026.9
(22) Anmeldetag: 04.05.2002
(51) Int. Cl.: B60J 7/00

(54) **Rollovorrichtung für ein transparentes Dachelement**
Roller blind for transparent roof element
Store enroulable pour élément de toit transparent

(30) Priorität: 14.05.2001 DE 10124100
(43) Veröffentlichungstag der Anmeldung: 20.11.2002
(73) Patentinhaber: Webasto Vehicle Systems International GmbH, 82131 Stockdorf (DE)
(72) Erfinder: Glasl, Sebastian, 81827 München (DE)
(74) Vertreter: Wiese, Gerhard

(56) Entgegenhaltungen:
- DE-C- 19 750 713
- DE-C- 19 750 715
- US-A- 4 874 026

## Beschreibung

Die vorliegende Erfindung betrifft eine Rollovorrichtung für ein transparentes Dachelement, ein Fenster oder dergleichen, insbesondere für Fahrzeuge, umfassend eine Wickelwelle mit einem auf diese aufwickelbaren bzw. von dieser abwickelbaren Rollotuch, einen am freien Ende des Rollotuches angeordneten, in Aufwickelund Auszugsrichtung des Rollos beweglichen Zugspriegel, eine an dem Zugspriegel angreifende, in Auszugsrichtung wirkende Zugseilanordnung, und eine der Wickelwelle zugeordnete Rückstellfeder, die beim Ausziehen des Rollos gespannt wird.

Derartige Rollovorrichtungen dienen beispielsweise als Sonnenschutz für ein Fahrzeugdach mit einem einer Dachöffnung zugeordneten durchsichtigen oder durchscheinenden Deckel, als Blendschutz bei Fahrzeugrückfenstern, als Sichtschutz bei seitlichen Fahrzeugfenstern oder dergleichen. Eine allgemeine Forderung für derartige Rollovorrichtungen ist neben einfacher Handhabbarkeit und hoher Funktionssicherheit ein einfacher Aufbau sowie ein geringer Platzbedarf. Das gilt insbesondere für Rollovorrichtungen an Kraftfahrzeugdächern, für die nur ein äußerst geringer Einbauraum zur Verfügung steht.

Rollosysteme der eingangs beschriebenen Art zeichnen sich dadurch aus, daß eine Antriebskraft nur in eine Richtung, nämlich der Auszugs- oder Schließrichtung aufgebracht werden muß, während die Aufwickel- oder Öffnungsbewegung durch die beim Schließen gespannte Rückstellfeder bewirkt wird. Dies ermöglicht einen einfachen platzsparenden Aufbau des Rollosystems und der zugeordneten Antriebsvorrichtungen.

Ein weiteres Problem war auch immer die exakte Parallelführung des Zugspriegels, die eine verkantungsfreie Bewegung dieses Zugspriegels und eine faltenfreie Öffnung und Schließung des Rollos gewährleistet. Zu diesem Zweck greift im allgemeinen an jedem Spriegelende ein Zugseil an, wobei sichergestellt werden muß, daß beide Zugseile gleichmäßig bei der Schließbewegung eingeholt und bei der Öffnungsbewegung ausgelassen werden.

Die vorgenannten Probleme, insbesondere das Problem des Platzbedarfs für die Rollovorrichtung werden noch verschärft, wenn zwei oder mehr hintereinander angeordnete Rollovorrichtungen vorgesehen werden sollen, wie das z.B. bei sehr langen Fahrzeugen, etwa Omnibussen, der Fall sein kann.

Durch die DE 197 32 686 A1 ist bereits eine gattungsgemäße Anordnung bekannt, bei der die Zugseilanordnung ein einziges Zugseil aufweist, welches von einem in Schließrichtung vor dem Zugspriegel angeordneten Festpunkt aus über eine im Bereich eines ersten Spriegelendes angeordnete erste Umlenkrolle, sodann über eine im Bereich des zweiten Spriegelendes angeordnete zweite Umlenkrolle und von dort zu einem in Schließrichtung vor dem Zugspriegel angeordneten, das Rollo ausziehenden Zugmechanismus verläuft.

Das Zugseil weist demnach ein festes Ende auf, welches als in dem Festpunkt festgelegt bzw. festgehalten angesehen werden kann, sowie ein loses Ende, welches direkt oder gegebenenfalls über Umlenkungen mit dem Zugmechanismus verbunden ist. Als Zugseil sollen nicht nur Seile, sondern alle Arten von flexiblen Zugmitteln, wie Ketten, Riemen, Kabel, Bänder oder dergleichen verstanden werden. Als Umlenkrollen werden bevorzugt drehbar gelagerte Rollen angesehen; in einer einfacheren Ausführungsform und bei einer verkantungsfreien Führung des Zugspriegels können jedoch auch feststehende Rollen, Bolzen oder Stifte an Stelle von Umlenkrollen verwendet werden, oder es kann ein Führungskanal für das Zugseil am Zugspriegel vorgesehen sein.

Wenn auf das lose Seilende eine Zugkraft aufgebracht und die gesamte Seillänge zwischen Festpunkt und Zugmechanismus verkürzt wird, dann verteilt sich diese Verkürzung gleichmäßig auf den dem Festpunkt zugeordneten Seilabschnitt und den dem Zugkraft-Angriffspunkt zugeordneten Seilabschnitt, so daß der Zugspriegel parallel zu sich selbst in Schließrichtung verstellt wird. In entsprechender Weise verteilt sich bei einem Auslassen des Zugseiles im Zugkraft-Angriffspunkt die ausgelassene Seillänge gleichmäßig auf den dem Festpunkt zugeordneten Seilabschnitt und den dem Zugkraft-Angriffspunkt zugeordneten Seilabschnitt, so daß sich der Zugspriegel unter der Wirkung der die Wickelwelle antreibenden Rückstellfeder gleichmäßig in Öffnungsrichtung bewegt.

Auf diese Weise kann mit einem auf ein einziges Zugseil wirkenden Seilverstellmechanismus ein gleichmäßiges und korrektes Schließen und Öffnen der Rollovorrichtung bewerkstelligt werden. Es versteht sich, daß die Umlenkrollen leichtgängig sein und das Seil möglichst reibungsfrei über diese Umlenkrollen geführt sein sollten.

Die vorstehend beschriebene Rollovorrichtung ist bisher nur bei einfachen Rollos verwirklicht worden, da der konstruktive Aufbau bei Anordnungen mit zwei oder mehr Rollos einer Verwirklichung hinderlich ist und insbesondere das Problem des Platzbedarfs für die Antriebsvorrichtungen mehrerer Rollos vor allem bei Kraftfahrzeugen schwierig zu lösen ist.

Es ist die Aufgabe der Erfindung, eine Rollovorrichtung zu schaffen, bei der die gesamte, durch Rollos abzudeckende Fläche mit einfachen konstruktiven Mitteln und mit einem möglichst geringen Platzbedarf auf zwei oder mehr einzelnen Rollos verteilt werden kann.

Diese Aufgabe ist erfindungsgemäß durch die im Anspruch 1 beschriebenen Merkmale gelöst.

Zunächst wird die gesamte abzudeckende Fläche in sinnvoller Weise aufgeteilt und auf mehrere Rollos verteilt, d.h. neben einem ersten Rollo sind wenigstens ein oder gegebenenfalls auch mehrere Rollos vorgesehen.

Um den konstruktiven Aufbau zu vereinfachen, sind alle Rollos durch ein und denselben Zugmechanismus gleichzeitig betätigbar, d.h. die Seilenden aller Rollos sind mit einem einzigen Zugmechanismus verbunden. Dazu sind diese Seilenden jeweils auf separate, rollospezifische Trommelabschnitte aufwickelbar, die nebeneinander auf der gleichen Antriebswelle des Zugmechanismus angeordnet sind; um gegebenenfalls unterschiedliche Auszugslängen der Rollos zu berücksichtigen, sind die Wickeldurchmesser der Trommelabschnitte jeweils so an die zugeordneten Auszugslängen angepaßt, daß alle Rollos gleichzeitig ihren ausgezogenen bzw. aufgewickelten Zustand erreichen.

Durch die DE 42 13 108 C2 ist bereits eine Rollovorrichtung mit drei hintereinander angeordneten Rollos bekannt. Dabei sind jedoch die Rollos direkt miteinander verbunden, d.h. sie verhalten sich wie ein einziges Rollo, welches z.B. beim Öffnen einen einzigen Bereich zunehmend freigibt und beim Schließen wieder abdeckt.

Durch die DE-C-197 50 715 ist eine Rollovorrichtung mit mehreren hintereinander liegenden Rolles bekannt. Diese Rollos werden dabei durch einen einzigen Antriebs mechanismus anhand eines Antriebskabels mit verschiedenen Mitnehmern betätigt.

Durch die DE 197 50 713 C1 ist eine Rollovorrichtung mit zwei auf eine gemeinsame Wickelwelle aufwickelbaren Rollotüchern bekannt. Eine solche Vorrichtung läßt nur eine jeweils entgegengesetzte Schließ- bzw. Öffnungsrichtung zweier Rollos zu, so daß sie in dieser Hinsicht nur beschränkt einsetzbar ist; außerdem ist sie auf zwei Rollos beschränkt, d.h. mehr als zwei Rollos lassen sich mit diesem Prinzip nicht miteinander koppeln.

Weitere günstige Ausgestaltungen der einzelnen Rollos und der zugeordneten Komponenten ihrer Antriebssysteme werden nachstehend beschrieben.

Die Wickeldurchmesser werden in einfacher Weise so bestimmt, daß das Zahlenverhältnis jeweils zweier Rollo-Auszugslängen gleich dem Zahlenverhältnis der Wickeldurchmesser der zugehörigen Trommelabschnitte ist.

Um ein schlupffreies Ablaufen des Zugseils über die Umlenkrollen und damit eine verkantungsfreie Verstellung des Zugspriegels weiter zu verbessern, ist gemäß einer weiteren Ausgestaltung der Erfindung vorgesehen, daß die beiden Umlenkrollen miteinander drehgekoppelt und damit synchronisiert sind, wie anhand eines Ausführungsbeispiels beschrieben wird.

Um die erforderliche Seilkraft so gering wie möglich zu halten, ist vorgesehen, daß vorzugsweise sowohl der zu dem Festpunkt geführte Seilabschnitt als auch der zu dem Zugmechanismus geführte Seilabschnitt jeweils im wesentlichen in der Rolloebene und in Schließrichtung, das heißt senkrecht zum Zugspriegel verlaufen, so daß keine für die Schließbewegung unwirksamen Seilkraftkomponenten gegeben sind.

Der Festpunkt kann beispielsweise ein Punkt sein, in welchem das Seil in einer Seileinspannvorrichtung festgehalten wird. Um jedoch konstruktiv freier zu sein, kann der Festpunkt auch beispielsweise durch eine Seilumlenkvorrichtung definiert sein, über die das Zugseil zu einer dahinter angeordneten Seileinspannvorrichtung geführt ist. Der Verlauf des Zugseils hinter der Seilumlenkvorrichtung ist für die Funktion der Rollovorrichtung ohne Bedeutung, erweitert jedoch die Möglichkeiten, die Seileinspannvorrichtung konstruktiv günstig anzuordnen.

In ähnlicher Weise kann der Zugmechanismus direkt oder gegebenenfalls über Umlenkungen an dem zugeordneten Seilabschnitt angreifen. Die letztere Ausgestaltung ermöglicht wiederum eine konstruktiv weitgehend freie Anordnung des Zugmechanismus, wie anhand eines Ausführungsbeispieles genauer dargelegt wird.

Insbesondere bei horizontalen Rollovorrichtungen, d.h. also beispielsweise bei Rollovorrichtungen für ein Fahrzeugdach, ist es sinnvoll und üblich, den Zugspriegel in bezüglich der Schließrichtung seitlichen Führungsschienen zu führen; in diesem Fall ist gemäß einer weiteren Ausgestaltung der Erfindung vorgesehen, daß die zu dem Festpunkt und dem Zugmechanismus geführten Seilabschnitte jeweils in einer zugeordneten Führungsschiene verlaufen. Dadurch erhalten diese Seilabschnitte einerseits selbst eine Führung, andererseits sind sie in ästhetisch ansprechender Weise durch die Führungsschienen verdeckt.

Eine ebenfalls konstruktiv günstige und ästhetisch ansprechende Lösung ergibt sich gemäß einer weiteren Ausgestaltung der Erfindung dadurch, daß die Rückstellfeder eine innerhalb der Wickelwelle angeordnete Spiralfeder ist, deren eines Federende mit der drehbaren Wickelwelle und deren anderes Federende mit einem in die Wickelwelle hineinragenden drehfesten Lagerzapfen oder dergleichen verbunden ist.

Der Seilverstellmechanismus kann im einfachsten Fall ein am losen Seilende angeordneter Griff sein, über den eine Zugkraft auf das Zugseil aufgebracht werden kann und der beispielsweise zum Arretieren der Rollovorrichtung in eine geeignete Arretierungsvorrichtung eingehängt werden kann. In bevorzugter Ausgestaltung umfaßt der Seilverstellmechanismus jedoch Seiltrommeln, die im einfachsten Fall manuell, bevorzugt aber mittels eines Elektromotors drehantreibbar sind, wie bereits dargelegt wurde.

Mehrere Ausführungsbeispiele der Erfindung sind in der Zeichnung dargestellt und im folgenden näher beschrieben. Es zeigen:
- Fig. 1: schematisch eine Ansicht eines Fahrzeugdaches;
- Fig. 2: schematisch eine perspektivische Ansicht einer einzelnen Rollovorrichtung zum Einbau in die Dachöffnung des Fahrzeugdaches der Fig. 1, die erfindungsgemäß mit einer oder mehreren weiteren Rollovorrichtungen kombiniert werden kann;
- Fig. 3: eine Einzelheit der Fig. 2 in einer Schnittansicht;
- Fig. 4: schematisch eine Draufsicht auf eine Rollovorrichtung mit zwei Rollos;
- Fig. 5: schematisch eine Ansicht zweier drehverbundener Umlenkrollen eines Zugspriegels.

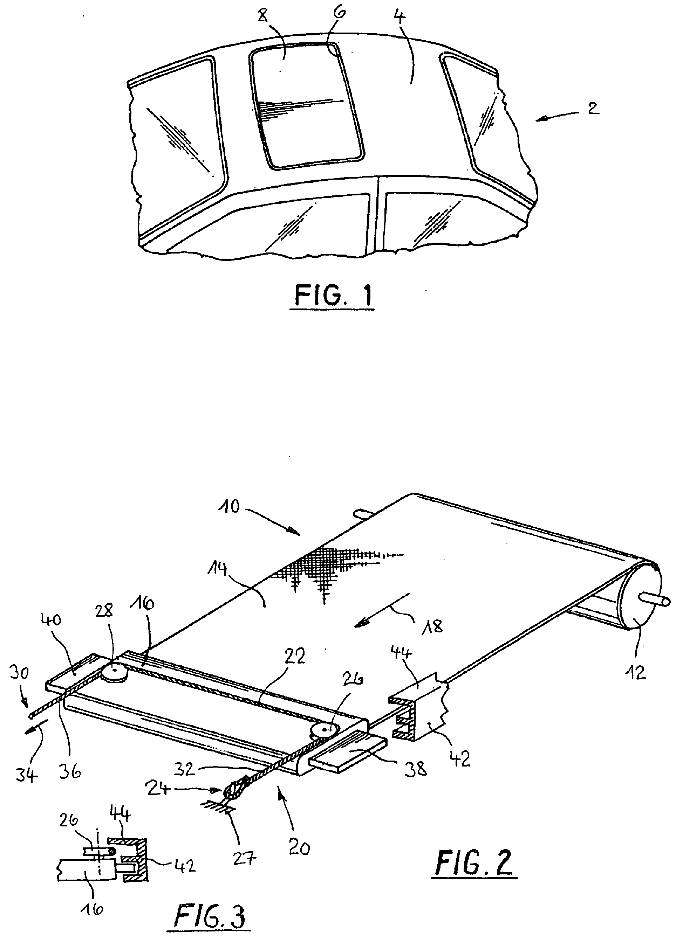

In Fig. 1 ist ein Fahrzeug 2 mit einem festen Fahrzeugdach 4 dargestellt. Eine in dem Fahrzeugdach 4 ausgebildete Dachöffnung 6 ist durch einen Deckel 8 verschließbar. Bei dem Deckel 8 kann es sich entweder um einen fest installierten oder um einen öffnungsfähigen Deckel handeln, nämlich beispielsweise ein Hebedach, ein Schiebedach, ein Schiebehebedach oder ein Spoilerdach. Der Deckel 8 besteht aus einem durchsichtigen oder durchscheinenden Werkstoff, wie beispielsweise Glas oder Acrylglas.

Die im wesentlichen rechteckige Dachöffnung 6 ist in der üblichen und deshalb nicht näher dargestellten Weise durch eine umlaufende Rahmenanordnung aus Profilelementen begrenzt, die einerseits als Verstärkung des durch die Dachöffnung 6 geschwächten Fahrzeugdaches 4 und andererseits zur Aufnahme und gegebenenfalls Führung des Deckels 8 dient. Außerdem ist in die Rahmenanordnung von unten eine die Dachöffnung 6 abdeckende Rollovorrichtung etwa gemäß der Fig. 2 eingesetzt. Das Rollotuch der Rollovorrichtung besteht vorzugsweise aus dem gleichen Material wie der Fahrzeugdachhimmel, so daß bei geschlossener Rollovorrichtung der Fahrzeughimmel einen einheitlichen Anblick bietet. Eine wesentliche Funktion der Rollovorrichtung ist jedoch, das durch den Deckel 8 hindurchtretende Sonnenlicht abzuschirmen.

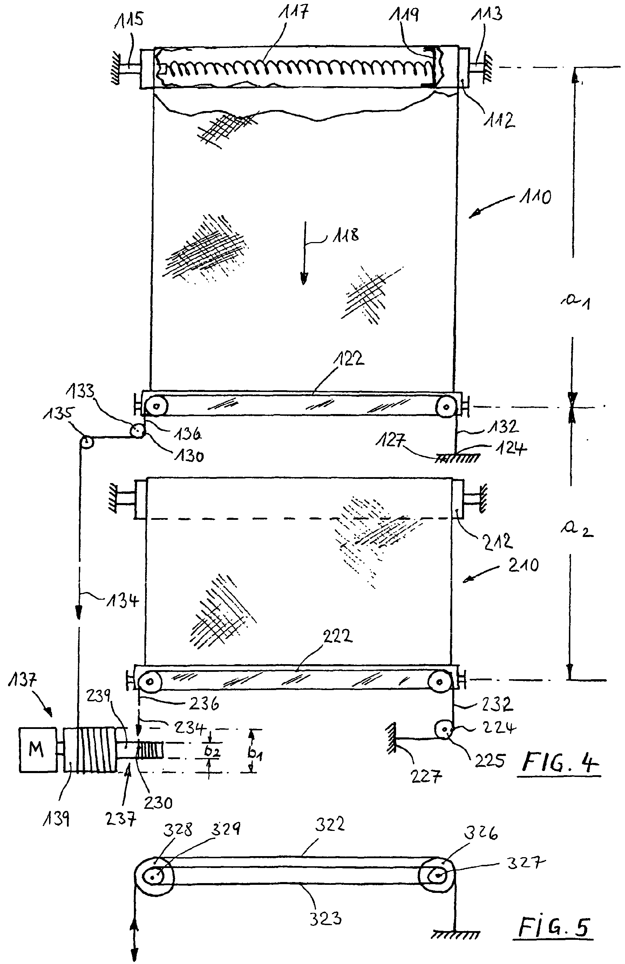

Fig. 2 dient im wesentlichen zu Erläuterungen von bei den einzelnen Rollos der Fig. 4 verwirklichten technischen Merkmalen.

Die in Fig. 2 dargestellte Rollovorrichtung 10 umfaßt im wesentlichen eine Wickelwelle 12, ein auf diese aufwickelbares bzw. von dieser abwickelbares Rollotuch 14, einen am freien Ende des Rollotuches 14 angeordneten Zugspriegel 16 und eine an dem Zugspriegel angreifende, in der durch den Pfeil 18 bezeichneten Schließrichtung wirkende Zugseilanordnung 20 zum Schließen der Rollovorrichtung 10. Zum Öffnen der Rollovorrichtung 10 in der dem Pfeil 18 entgegengesetzten Öffnungsrichtung dient eine an sich bekannte, der Wickelwelle 12 zugeordnete Rückstellfeder, die beim Öffnen der Rollovorrichtung 10 gespannt wird und mittels der beim Nachlassen des auf die Zugseilanordnung 20 wirkenden Seilzuges das Rollotuch 14 auf die Wickelwelle 12 aufgewickelt wird.

Die Zugseilanordnung 20 besteht im wesentlichen aus einem einzigen Zugseil 22, welches von einem in Schließrichtung vor dem Zugspriegel 16 angeordneten, durch eine Seileinspannvorrichtung 27 definierten Festpunkt 24 aus über eine im Bereich eines ersten Spriegelendes angeordnete erste Umlenkrolle 26, sodann über eine im Bereich des zweiten Spriegelendes angeordnete zweite Umlenkrolle 28 und von dort zu einem in Schließrichtung vor dem Zugspriegel angeordneten verstellbaren Zugmechanismus verläuft. Der Zugkraft-Angriffspunkt 30 ist ein fiktiver Punkt, zu dem der zugeordnete Seilabschnitt 36 geführt ist und in dem man sich die Zugkraft 34 angreifend denken kann. In der Praxis kann der Seilabschnitt 36 im Zugkraft-Angriffspunkt 30 mit einem beliebigen Seilverstellmechanismus verbunden sein, oder er kann im Zugkraft-Angriffspunkt beispielsweise in eine Umlenkvorrichtung eintreten und hinter dieser Umlenkvorrichtung mit einem Zugoder Seilverstellmechanismus verbunden sein, wie anhand eines Ausführungsbeispieles noch genauer dargelegt wird. In ähnlicher Weise kann der Festpunkt 24 durch eine Umlenkvorrichtung definiert sein, wobei die eigentliche Fixierung des dem Festpunkt zugeordneten Seilabschnittes 32 hinter dieser Umlenkvorrichtung in einer Seileinspannvorrichtung erfolgt.

Die Funktionsweise der Rollovorrichtung 10 ist wie folgt: Wenn auf den Seilabschnitt 36 eine Zugkraft 34 aufgebracht wird, dann wird das gesamte Zugseil 22 verkürzt, wobei sich die Verkürzung gleichmäßig auf die Seilabschnitte 32 und 36 verteilt. Dadurch wird der Zugspriegel 10 parallel zu sich selbst in Schließrichtung 18 bewegt und das Rollovorrichtung 10 geschlossen. Wenn die auf den Seilabschnitt 36 wirkende Zugkraft aufgehoben wird, dann kann sich der Zugspriegel 16 unter der Wirkung der Rückstellfeder der Wickelwelle 12 entgegen der Richtung des Pfeiles 18 in Öffnungsrichtung bewegen; die dabei auftretende Verlängerung des Zugseils 22 kann sich wiederum gleichmäßig auf die beiden Seilabschnitte 32 und 36 verteilen, so daß sich der Zugspriegel 16 verkantungsfrei und parallel zu sich selbst verstellen kann.

Wie aus den Fig. 2 und 3 hervorgeht, ist der Zugspriegel 16 an seinen beiden Enden mit Führungsschuhen 38 und 40 versehen, die in bezüglich der Schließrichtung 18 seitlich angeordneten Führungsschienen 42 geführt werden (von denen in Fig. 2 nur eine bruchstückhaft gezeigt ist). Wie insbesondere aus Fig. 3 zu ersehen ist, haben die Führungsschienen 42 jeweils einen oberen Abdeckflansch 44, welcher die von den Umlenkrollen 26 bzw. 28 jeweils zu dem Festpunkt 24 bzw. dem Zugkraft-Angriffspunkt 34 verlaufenden Seilabschnitte 32 bzw. 36 abdecken.

Fig. 4 zeigt eine erfindungsgemäße Rollovorrichtung die aus zwei hintereinander angeordneten Rollos 110 und 210 besteht, wobei das Rollo 210 beispielsweise exakt dem in Fig. 2 gezeigten Rollo 10 entsprechen kann. Am Beispiel der Rollos 110 ist der Aufbau einer Wickelwelle 112 gezeigt. Diese ist als Hohlwelle ausgebildet und beidseitig auf drehfesten Lagerzapfen 113 und 115 drehgelagert. Innerhalb der Wickelwelle 112 ist eine als Rückstellfeder dienende Spiralfeder 117 angeordnet, deren eines Ende beispielsweise mit dem Lagerzapfen 115 verbunden ist und deren anderes Ende mit einem in der Wickelwelle 112 fest angeordneten Haltebügel 119 verbunden ist. Beim Schließen des Rollos in Richtung des Pfeiles 118 wird die Spiralfeder 117 gespannt, so daß sie die zum Öffnen des Rollos erforderliche Rückstellkraft speichert.

Wie weiter anhand des Rollos 110 zu erkennen ist, weist das diesem zugeordnete Zugseil 122 einen Seilabschnitt 132 auf, welcher direkt im Festpunkt 124 in beliebiger Weise in einer Seileinspannvorrichtung 127 fest verankert ist. Ein Seilabschnitt 136 wird über Umlenkrollen 133 und 135 zu einem allgemein mit 137 bezeichneten Seilverstellmechanismus geführt. Der Zugkraft-Angriffspunkt 130 ist in diesem Fall durch den Auflaufpunkt des Seilabschnittes 136 auf die erste Umlenkrolle 133 definiert, in dem die durch den Seilverstellmechanismus 137 aufgebrachte Zugkraft 134 auf den Seilabschnitt 136 wirkt. Die Umlenkung des losen Seilendes erlaubt es, den Seilverstellmechanismus 137 an einer beliebigen, baulich günstigen Stelle anzuordnen.

Das Rollo 210 ist ähnlich aufgebaut wie das Rollo 110, so daß es nicht im einzelnen beschrieben zu werden braucht. Das Zugseil 222 weist einen ersten Seilabschnitt 232 auf, welcher zu einem Festpunkt 224 geführt ist. Der Festpunkt 224 ist durch den Auflaufpunkt auf eine Umlenkrolle 225 definiert, von der aus das feste Zugseilende zu einer Seileinspannvorrichtung 227 geführt ist. Der andere Seilabschnitt 236 ist direkt zu einem Seilverstellmechanismus 237 geführt, welcher eine in Schließrichtung wirkende Zugkraft 234 auf den Seilabschnitt 236 aufbringt. Der Zugkraft-Angriffspunkt 230 ist durch den Auflaufpunkt des Seilabschnittes 236 auf den Trommelabschnitt 239 definiert.

Wie die Fig. 4 erkennen läßt, werden die losen Seilabschnitte 136 bzw. 236 der beiden Rollovorrichtungen 110 bzw. 210 auf einen gemeinsamen Seilverstellmechanismus 137/237 geführt, welcher einen elektrischen Antriebsmotor M umfaßt.

Auf diese Weise können die beiden Rollovorrichtungen 110, 210 gemeinsam durch einen einzigen Seilverstellmechanismus betätigt werden.

Dieser gemeinsame Seilverstellmechanismus umfaßt eine Seiltrommelanordnung mit einem ersten Trommelabschnitt 139 für das lose Seilende der Rollovorrichtung 110 sowie einem zweiten Trommelabschnitt 239 für das lose Seilende der Rollovorrichtung 210. Wie die Fig. 4 weiter erkennen läßt, haben die Rollovorrichtungen 110 bzw. 210 unterschiedliche Auszugslängen a₁ bzw. a₂. Dementsprechend haben die Trommelabschnitte 139 bzw. 239 unterschiedliche Trommeldurchmesser b₁ bzw. b₂. Es gilt: a₁/a₂ = b₁/b₂. Auf diese Weise verhält sich der auf eine Umdrehung der Seiltrommelanordnung bezogene Wickelweg des Trommelabschnittes 139 zum Wickelweg des Trommelabschnittes 239 wie die Auszugslänge a₁ zur Auszugslänge a₂. Das bedeutet, daß die beiden Rollovorrichtungen 110 bzw. 210 jeweils in der gleichen Zeitspanne geschlossen bzw. geöffnet werden.

Fig. 5 zeigt eine Einzelheit einer Zugseilanordnung. Um einen schlupf- und reibungsfreien Ablauf des Zugseils 322 über die Umlenkrollen 326 bzw. 328 zu gewährleisten, sind diese beiden Umlenkrollen durch einen Antriebsriemen 323 miteinander antriebsverbunden. Zu diesem Zweck sind den Umlenkrollen 326, 328 jeweils mit diesen fest verbundene Synchronisierungsrollen 327 bzw. 329 zugeordnet, über die der Antriebsriemen 323 geführt ist.

Der Motor M kann bei einer Anordnung mit zwei Rollovorrichtungen entsprechen Fig. 4 auch an einem Festelement zwischen beiden Rollovorrichtungen 110 bzw. 210 angeordnet sein. Der zweite Rollovorrichtung 210 kann auch gegenläufig zum ersten Rollovorrichtung 110 angeordnet sein, so daß die Zugspriegel beim Ausziehen der Rollobahnen, also beim Betätigen in Schließrichtung, aufeinander zu laufen.

### Bezugszeichenliste

- 2: Fahrzeug
- 4: Fahrzeugdach
- 6: Dachöffnung
- 8: Deckel
- 10: Abdeckrollo
- 12: Wickelspule
- 14: Rollotuch
- 16: Zugspriegel
- 18: Pfeil (Schließrichtung)
- 20: Zugseilanordnung
- 22: Zugseil
- 24: Festpunkt
- 26: erste Umlenkrolle
- 27: Seileinspannvorrichtung
- 28: zweite Umlenkrolle
- 30: Zugkraft-Angriffspunkt
- 32: Seilabschnitt
- 34: Zugkraft
- 36: Seilabschnitt
- 38: Führungsschuhe
- 40: Führungsschuhe
- 42: Führungsschiene
- 44: Abdeckflansch
- 110: Abdeckrollo
- 112: Wickelspule
- 113: Lagerzapfen
- 115: Lagerzapfen
- 117: Spiralfeder
- 118: Schließrichtung
- 119: Haltebügel
- 122: Zugseil
- 124: Festpunkt
- 127: Seileinspannvorrichtung
- 130: Zugkraft-Angriffspunkt
- 132: Seilabschnitt
- 133: Umlenkrolle
- 134: Zugkraft
- 135: Umlenkrolle
- 136: Seilabschnitt
- 137: Seilverstellmechanismus
- 139: Trommelabschnitt
- 210: Abdeckrollo
- 212: Wickelspule
- 222: Zugseil
- 224: Festpunkt
- 225: Seilumlenkvorrichtung (Umlenkrolle)
- 227: Seileinspannvorrichtung
- 230: Zugkraft-Angriffspunkt
- 232: Seilabschnitt
- 234: Zugkraft
- 236: Seilabschnitt
- 237: Seilverstellmechanismus
- 239: Trommelabschnitt
- 322: Zugseil
- 323: Antriebsriemen
- 326: Umlenkrolle
- 327: Synchronisierungsrolle
- 328: Umlenkrolle
- 329: Synchronisierungsrolle
- a₁: Auszugslänge
- a₂: Auszugslänge
- b₁: Trommelabschnitt-Durchmesser
- b₂: Trommelabschnitt-Durchmesser
- M: Elektromotor

## Patentansprüche

1. Rollovorrichtung, insbesondere für transparente Dachelemente von Fahrzeugen,
- mit einer Wickelwelle (12) und einem zugehörigen, wickelbaren Rollo (14) und mit einem am freien Ende des Rollos angeordneten, in Auszugsrichtung (18) des Rollos und entgegen hierzu beweglichen Zugspriegel (16) sowie einer am Zugspriege (16) angreifenden, in Auszugsrichtung wirkenden Zugseilanordnung (20) und einer der Wickelwelle zugeordneten Rückstellfeder, insbesondere einer Spiralfeder 117, die beim Ausziehen des Rollos gespannt wird,
- wobei die Zugseilanordnung (20) ein einziges Zugseil (22) aufweist, welches an einem in Auszugsrichtung (18) jenseits des Zugspriegels (16) liegenden Festpunkt (24) befestigt ist und über eine im Bereich des einen Spriegelendes angeordnete erste Umlenkrolle (26) und sodann über eine im Bereich des anderen Spriegelendes angeordnete zweite Umlenkrolle (28) geführt ist und von der zweiten Umlenkrolle (28) zu einem in Auszugsrichtung (18) jenseits des Zugspriegels (16) angeordneten, das Rollo ausziehenden, vorzugsweise elektromotorischen Zugmechanismus verläuft,
**dadurch gekennzeichnet,**
- **daß** neben dem Rollo (110) zumindest ein weiteres, gleichartig ausgebildetes Rollo (210) vorgesehen ist,
- **daß** alle Rollos durch ein und denselben Zugmechanismus (137) gleichzeitig betätigbar sind,
- und **daß** die Zugseile (122; 222) der Rollos mit ihren einen Enden an jeweils separaten, rollospezifischen Festpunkten (127; 227) befestigt sind und mit ihren anderen Enden auf separate, rollospezifische Trommelabschnitte (139; 239) aufwickelbar sind, die nebeneinander auf der Antriebswelle des Zugmechanismus (137) angeordnet sind,
- wobei die Wickeldurchmesser (b₁, b₂) der rolloseezifischen Trommelabschnitte (139; 239) den Auszugslängen (a₁,a₂) der Rollos dahingehend angepaßt sind, daß alle Rollos durch die Antriebswelle des Zugmechanismus (137) gleichzeitig in ihre Öffnungs- und Schließstellung bringbar sind.

2. Rollovorrichtung nach Anspruch 1, **dadurch gekennzeichnet, daß** das Zahlenverhältnis jeweils zweier Rollo-Auszugslängen (a₁, a₂) gleich dem Zahlenverhältnis der Wickeldurchmesser (b₁, b₂) der zugehörigen Trommelabschnitte (139, 239) ist.

3. Rollovorrichtung nach Anspruch 1 oder 2, **dadurch gekennzeichnet, daß** für jedes Rollo die beiden auf dem Zugspriegel (16) angeordneten Umlenkrollen (326, 328) vermittels eines die beiden Umlenkrollen (326, 328) miteinander verbindenden, endlosen Antriebsriemens (323) zwangsweise drehgekoppelt sind.

4. Rollovorrichtung nach einem der Ansprüche 1 bis 3, **dadurch gekennzeichnet, daß** für jedes Rollo der zu dem Festpunkt (24) geführte Seilabschnitt (32) des Zugseils (22) und/oder der zu dem Zugkraft-Angriffspunkt (30) geführte Seilabschnitt (36) jeweils in der Rolloebene und in Auszugsrichtung (18) verlaufen.

5. Rollovorrichtung nach einem der Ansprüche 1 bis 4, **dadurch gekennzeichnet, daß** für jedes Rollo der Festpunkt (24) durch eine Seileinspannvorrichtung (27) gebildet ist, wobei vorzugsweise eine separate Umlenkrolle (225) zwischen der Seileinspannvorrichtung (27) und dem Zugspriegel (16) vorgesehen ist.

6. Rollovorrichtung nach einem der Ansprüche 1 bis 5, **dadurch gekennzeichnet, daß** für jedes Rollo der Zugspriegel (16) in bezüglich der Auszugsrichtung (18) seitlichen Führungsschienen (42) geführt ist, und daß die zu dem Festpunkt (24) und zu dem Zugmechanismus (137) geführten Seilabschnitte (32, 36) jeweils innerhalb der benachbarten Führungsschiene (42) geführt sind, wobei vorzugsweise eine separate Umlenkrolle (135) zwischen dem Zugmechanismus (137) und dem Zugspriegel (16) vorgesehen ist.

7. Rollovorrichtung nach einem der Ansprüche 1 bis 6, **dadurch gekennzeichnet, daß** für jedes Rollo die Rückstellfeder (117) eine innerhalb der Wickelwelle (112) angeordnete Spiralfeder ist, deren eines Federende mit der drehbaren Wickelwelle (112) und deren anderes Federende mit einem in die Wickelwelle (112) hineinragenden drehfesten Lagerzapfen (115) verbunden ist.

## Claims

1. Roller blind device, in particular for transparent roof elements of vehicles,
- having a winding shaft (12) and an associated roller blind (14) that can be wound up, and a draw bar (16) which is arranged at the free end of the roller blind, can be moved in the pull-out direction (18) of the roller blind and in the opposite direction, and also a pull cable arrangement (20) acting on the draw bar (16) and acting in the pull-out direction, and a return spring that is assigned to the winding shaft, in particular a spiral spring 117, which is tensioned when the roller blind is pulled out,
- the pull cable arrangement (20) having a single pull cable (22), which is fixed at a fixed point (24) located on the other side of the draw bar (16) in the pull-out direction (18) and is led over a first deflection roller (26) arranged in the region of one end of the bar and then over a second deflection roller (28) arranged in the region of the other end of the bar, and runs from the second deflection roller (28) to a pulling mechanism, preferably an electric-motor pulling mechanism, which pulls out the roller blind and is arranged on the other side of the draw bar (16) in the pull-out direction (18),
**characterized**
- **in that**, in addition to the roller blind (110), at least one further roller blind (210) of the same design is provided,
- **in that** all the roller blinds can be actuated simultaneously by one and the same pulling mechanism (137),
- and **in that** the pull cables (122 ; 222) of the roller blinds are fixed by their one ends to respectively separate fixed points (127; 227) specific to the roller blinds and, by their other ends, can be wound up on to separate drum sections (139; 239) specific to the roller blinds and arranged beside one another on the drive shaft of the pulling mechanism (137),
- the winding diameters (b₁, b₂) of the roller-blind-specific drum sections (139; 239) being matched to the pull-out lengths (a₁,a₂) of the roller blinds with the effect that all the roller blinds can be moved into the open and closed position simultaneously by the drive shaft of the pulling mechanism (137).

2. Roller blind device according to Claim 1, **characterized in that** the numerical ratio of two roller blind pull-out lengths (a₁, a₂) in each case is equal to the numerical ratio of the winding diameters (b₁, b₂) of the associated drum sections (139, 239).

3. Roller blind device according to Claim 1 or 2, **characterized in that**, for each roller blind, the two defection rollers (326, 328) arranged on the draw bar (16) are positively coupled in terms of rotation by means of an endless drive belt (323) connecting the two defection rollers (326, 328) to each other.

4. Roller blind device according to one of Claims 1 to 3, **characterized in that**, for each roller blind, the cable section (32) of the pull cable (22) that is led to the fixed point (24) and/or the cable section (36) that is led to the pulling force action point (30) in each case run in the plane of the roller blind and in the pull-out direction (18).

5. Roller blind device according to one of Claims 1 to 4, **characterized in that**, for each roller blind, the fixed point (24) is formed by a cable clamping device (27), a separate deflection roller (225) preferably being provided between the cable clamping device (27) and the draw bar (16).

6. Roller blind device according to one of Claims 1 to 5, **characterized in that**, for each roller blind, the draw bar (16) is guided in guide rails (42) at the side with respect to the pull-out direction (18), and **in that** the cable sections (32, 36) led to the fixed point (24) and to the pulling mechanism (137) are in each case guided within the adjacent guide rail (42), a separate deflection roller (135) preferably being provided between the pulling mechanism (137) and the draw bar (16).

7. Roller blind device according to one of Claims 1 to 6, **characterized in that**, for each roller blind, the return spring (117) is a spiral spring arranged within the winding shaft (112), whose one spring end is connected to the rotatable winding shaft (112) and whose other spring end is connected to a bearing pin (115) fixed against rotation and projecting into the winding shaft (112).

## Revendications

1. Store enroulable, notamment pour éléments de toits transparents de véhicules,
- comprenant un arbre enrouleur (12), un rideau enroulable associé (14) et un arceau de traction (16) disposé à l'extrémité libre dudit rideau et mobile dans une direction d'extraction (18) dudit rideau, et dans la direction inverse, ainsi qu'un ensemble (20) à câble de traction, venant en prise avec l'arceau de traction (16) et agissant dans le sens de l'extraction, et un ressort de rappel, notamment un ressort hélicoïdal (117) affecté à l'arbre enrouleur et tendu lors de l'extraction du rideau,
- sachant que l'ensemble (20) à câble de traction présente un unique câble de traction (22) qui est fixé en un point fixe (24) situé en deçà de l'arceau de traction (16) dans la direction d'extraction (18) ; est guidé par l'intermédiaire d'un premier galet de renvoi (26) disposé dans la région de l'une des extrémités de l'arceau, puis par l'intermédiaire d'un second galet de renvoi (28) disposé dans la région de l'autre extrémité dudit arceau ; et s'étend, à partir dudit second galet de renvoi (28), vers un mécanisme de traction de préférence équipé d'un moteur électrique, extrayant le rideau et placé en deçà de l'arceau de traction (16) dans la direction d'extraction (18),
**caractérisé par le fait**
- **qu'**un rideau supplémentaire (210), de réalisation similaire, est prévu en plus du rideau (110) ;
- **que** tous les rideaux peuvent être actionnés simultanément par un seul et même mécanisme de traction (137) ;
- et **que** tous les câbles de traction (122 ; 222) des rideaux sont fixés, par les unes de leurs extrémités, en des points fixes respectivement distincts (127 ; 227) spécifiques aux rideaux, et peuvent être enroulés, par leurs autres extrémités, sur des segments de tambours distincts (139 ; 239) spécifiques auxdits rideaux, qui sont agencés en juxtaposition sur l'arbre d'entraînement du mécanisme de traction (137),
- les diamètres d'enroulement (b₁, b₂) des segments de tambours (139 ; 239) spécifiques aux rideaux étant adaptés aux longueurs d'extraction (a₁, a₂) desdits rideaux, de telle sorte que tous les rideaux puissent être simultanément amenés à leurs positions d'ouverture et de fermeture, par l'arbre d'entraînement du mécanisme de traction (137).

2. Store enroulable selon la revendication 1, **caractérisé par le fait que** le rapport numérique, entre deux longueurs respectives d'extraction (a₁, a₂) des rideaux, est égal au rapport numérique entre les diamètres d'enroulement (b₁, b₂) des segments de tambours (139, 239) associés.

3. Store enroulable selon la revendication 1 ou 2, **caractérisé par le fait que**, pour chaque rideau, les deux galets de renvoi (326, 328) implantés sur l'arceau de traction (16) sont accouplés, en rotation forcée, au moyen d'une courroie menante sans fin (323) reliant l'un à l'autre les deux galets de renvoi (326, 328).

4. Store enroulable selon l'une des revendications 1 à 3, **caractérisé par le fait que**, pour chaque rideau, le tronçon (32) du câble de traction (22) guidé vers le point fixe (24), et/ou le tronçon (36) dudit câble qui est guidé vers le point (30) d'application de la force de traction, s'étend(ent) respectivement dans le plan du rideau, et dans la direction d'extraction (18).

5. Store enroulable selon l'une des revendications 1 à 4, **caractérisé par le fait que**, pour chaque rideau, le point fixe (24) est matérialisé par un pince-câble (27), un galet de renvoi (225) distinct étant prévu, de préférence, entre ledit pince-câble (27) et l'arceau de traction (16).

6. Store enroulable selon l'une des revendications 1 à 5, **caractérisé par le fait que**, pour chaque rideau, l'arceau de traction (16) est guidé dans des rails de guidage (42) occupant des positions latérales vis-à-vis de la direction d'extraction (18) ; et **par le fait que** les tronçons de câble (32, 36), gagnant le point fixe (24) et le mécanisme de traction (137), sont respectivement guidés à l'intérieur du rail de guidage (42) voisin, un galet de renvoi (135) distinct étant prévu, de préférence, entre ledit mécanisme de traction (137) et ledit arceau de traction (16).

7. Store enroulable selon l'une des revendications 1 à 6, **caractérisé par le fait que**, pour chaque rideau, le ressort de rappel (117) est un ressort hélicoïdal logé à l'intérieur de l'arbre enrouleur (112), dont l'une des extrémités est reliée audit arbre enrouleur rotatif (112), et dont l'autre extrémité est reliée à un tenon de portée (115) à verrouillage rotatif, pénétrant dans ledit arbre enrouleur (112).
